(19) Europäisches Patentamt / European Patent Office / Office européen des brevets

(11) **EP 2 805 958 A1**

(12) **EUROPÄISCHE PATENTANMELDUNG**

(43) Veröffentlichungstag:
26.11.2014 Patentblatt 2014/48

(51) Int Cl.:
*C07F 7/16* $^{(2006.01)}$

(21) Anmeldenummer: **14167910.0**

(22) Anmeldetag: **12.05.2014**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **23.05.2013 DE 102013209604**

(71) Anmelder: **Wacker Chemie AG**
**81737 München (DE)**

(72) Erfinder:
• **Alber, Anne**
**81379 München (DE)**
• **Kunert, Jan**
**64342 Seeheim (DE)**

(74) Vertreter: **Fritz, Helmut et al**
**Wacker Chemie AG**
**Intellectual Property**
**Hanns-Seidel-Platz 4**
**81737 München (DE)**

(54) **Verfahren zur Herstellung von Methylchlorsilanen**

(57) Gegenstand der Erfindung ist ein Verfahren zur Direktsynthese von Methylchlorsilanen durch Umsetzung von Chlormethan mit einer Kontaktmasse, die Silicium, Kupferkatalysator und mindestens 120 Gew.-ppm Mangan enthält.

**EP 2 805 958 A1**

**Beschreibung**

Die Erfindung betrifft ein Verfahren zur Direktsynthese von Methylchlorsilanen mit Manganpromotoren.

Bei der Direktsynthese von Methylchlorsilanen nach dem Müller-Rochow-Prozess wird metallisches Silicium mit Chlormethan in Gegenwart von verschiedenen Katalysatoren und gegebenenfalls Promotoren umgesetzt, wobei das Zielprodukt Dimethyldichlorsilan ist. Die Mischung aus Silicium, Katalysatoren und gegebenenfalls Promotoren wird als Kontaktmasse bezeichnet.

Weltweit werden derzeit jährlich an die 2 000 000 Tonnen Dimethyldichlorsilan hergestellt, d.h. kleine Verbesserungen im Herstellungsprozess, wie beispielsweise Erhöhung der Dimethyldichlorsilan-Selektivität haben dadurch eine große wirtschaftliche Auswirkung.

Zur Herstellung von Methylchlorsilanen wird metallurgisches Silizium eingesetzt. Dieses hat eine Reinheit von ca. 95 - 99%. Der Rest setzt sich zusammen aus Fremdelementen die entweder aus den Rohstoffen Quarz und Kohlenstoffquelle oder aus dem Herstellungsprozess (z.B. aus Schlackebestandteilen) ins Silizium gelangen. Diese Fremdelemente können in unterschiedlicher Form vorliegen, entweder als Einschlüsse, als intermetallische Phasen mit Silizium oder statistisch verteilt ins Silizium eindotiert. Für diese Elemente sind unterschiedliche Einwirkungen auf den Müller-Rochow-Prozess bekannt, entweder promotierend, neutral oder als Gift. Je nach Art des Vorliegens kann sich dasselbe Element auch unterschiedlich auswirken. Aus diesem Grund ist es sehr komplex eindeutige Zusammenhänge zwischen dem Reaktionsverlauf und der Konzentration eines bestimmten Elementes festzustellen. Die Einflüsse sind meist nur empirisch bekannt und nicht der genaue Wirkungsmechanismus.

Elemente für die eine promotierende Wirkung auf die Methylchlorsilan-Synthese bekannt ist, sind: Zn, Sn, P, Sb, Al, Sr, Ag, Au, B, Se, Te, Alkali- und Erdalkalimetalle, V, Cd, In. Beispielsweise wird die Erhöhung der Dimethyldichlorsilan-Selektivität beschrieben in DE102004046181A1 durch Sr, in US6407276A durch Au oder Ag, in US6339167A durch Al, in DE 4412837A durch V und in EP671402A durch Sb.

Über eine promotierende Wirkung von Mangan für die Methylchlorsilan-Synthese ist bislang in der Literatur nichts beschrieben. Für die Trichlorsilan-Synthese ist eine negative Wirkung von Mangan auf die Trichlorsilan -Selektivität und die Reaktivität beschrieben. Beispielsweise beschreibt WO2006/031120A1 ein Verfahren zur Herstellung von Trichlorsilan durch Umsetzung von Si mit HCl-Gas wobei das an den Reaktor gelieferte Si weniger als 100 ppm Mn enthält.

Gegenstand der Erfindung ist ein Verfahren zur Direktsynthese von Methylchlorsilanen durch Umsetzung von Chlormethan mit einer Kontaktmasse, die Silicium, Kupferkatalysator und mindestens 120 Gew.-ppm Mangan enthält.

Es wurde gefunden, dass eine erhöhte Konzentration von Mangan in der Kontaktmasse im Reaktor einen positiven Einfluss auf die Selektivität zum Hauptprodukt Dimethyldichlorsilan hat. Bei Konzentrationen von mindestens 120 Gew.-ppm Mangan wird eine um ca. 2% höhere Dimethydichlorsilan-Selektivität erreicht als bei den bisher verwendeten niedrigeren Konzentrationen.

Die erhöhte Mn-Konzentration in der Kontaktmasse kann aus den Rohstoffen, speziell dem Quarz, stammen, ins Silizium einlegiert werden oder in Form einer Mn-Verbindung der Kontaktmasse zugegeben werden, z.B. als Mangansalz, wie $MnCl_2$, MnS, oder als Mangan-Silizium-Legierung. Die erhöhte Mn-Konzentration muss nicht zwingend im Silizium vorliegen, sondern kann sich auch im Reaktor, insbesondere im Wirbelschichtreaktor durch Anreicherungseffekte einstellen. Die Mn-Konzentration in der Kontaktmasse beträgt vorzugsweise 200 - 5000 Gew.-ppm, besonders bevorzugt 300 - 600 Gew.-ppm Mn.

Das im Verfahren eingesetzte Silicium enthält vorzugsweise höchstens 5 Gew-%, besonders bevorzugt höchstens 2 Gew-%, insbesondere höchstens 1 Gew-% andere Elemente als Verunreinigungen. Die Verunreinigungen, welche mindestens 0,01 Gew-% ausmachen, sind vorzugsweise Elemente, ausgewählt aus Fe, Ni, Al, Ca, Cu, Zn, Sn, C, V, Ti, Cr, B, P, O.
Die Partikelgröße des Siliciums beträgt vorzugsweise mindestens 0,5 Mikrometer, besonders bevorzugt mindestens 5 Mikrometer, insbesondere mindestens 10 Mikrometer und vorzugsweise höchstens 650 Mikrometer, besonders bevorzugt höchstens 580 Mikrometer, insbesondere höchstens 500 Mikrometer.
Die mittlere Korngößenverteilung des Siliciums ist der d50-Wert und beträgt vorzugsweise mindestens 180 Mikrometer, besonders bevorzugt mindestens 200 Mikrometer, insbesondere mindestens 230 Mikrometer und vorzugsweise höchstens 350 Mikrometer, besonders bevorzugt höchstens 300 Mikrometer, insbesondere höchstens 270 Mikrometer.

Das Kupfer für den Katalysator kann ausgewählt werden aus metallischem Kupfer, einer Kupferlegierung oder einer Kupferverbindung. Die Kupferverbindung wird bevorzugt ausgewählt aus Kupferoxid und Kupferchlorid, insbesondere CuO, $Cu_2O$ und CuCl oder einer Kupfer-Phosphor-Verbindung (CuP-Legierung). Kupferoxid kann beispielsweise Kupfer in Form von Kupferoxid-Gemischen und in Form von Kupfer(II)oxid sein. Kupferchlorid kann in Form von CuCl oder in Form von $CuCl_2$ eingesetzt werden, wobei auch entsprechende Mischungen möglich sind. In einer bevorzugten Ausführungsform wird das Kupfer als CuCl eingesetzt.
Vorzugsweise werden auf 100 Gewichtsteile Silicium mindestens 0,1 Gewichtsteile, besonders bevorzugt mindestens 1 Gewichtsteil Kupferkatalysator und vorzugsweise höchstens 10 Gewichtsteile, insbesondere höchstens 8 Gewichtsteile Kupferkatalysator, jeweils bezogen auf metallisches Kupfer eingesetzt.

Vorzugsweise enthält die Kontaktmasse einen Zinkpromotor, der vorzugsweise aus Zinkoxid und Zinkchlorid ausgewählt wird. Vorzugsweise werden auf 100 Gewichtsteile Silicium mindestens 0,01 Gewichtsteile Zinkpromotor, besonders bevorzugt mindestens 0,1 Gewichtsteile Zinkpromotor und vorzugsweise höchstens 1 Gewichtsteile, insbesondere höchstens 0,5 Gewichtsteile Zinkpromotor, jeweils bezogen auf metallisches Zink eingesetzt.

Vorzugsweise enthält die Kontaktmasse einen Zinnpromotor, der vorzugsweise aus Zinnoxid und Zinnchlorid ausgewählt wird. Vorzugsweise werden auf 100 Gewichtsteile Silicium mindestens 0,001 Gewichtsteile Zinnpromotor, besonders bevorzugt mindestens 0,05 Gewichtsteile Zinnpromotor und vorzugsweise höchstens 0,2 Gewichtsteile, insbesondere höchstens 0,1 Gewichtsteile Zinnpromotor, jeweils bezogen auf metallisches Zinn eingesetzt.

Vorzugsweise enthält die Kontaktmasse eine Kombination aus Zinkpromotor und Zinnpromotor und insbesondere zusätzlich Phosphorpromotor.

Vorzugsweise sind mindestens 50 Gew.-%, insbesondere mindestens 80 Gew.-% der Summe aus Kupferkatalysator und Promotoren Chloride von Kupfer, Zink und Zinn.

Neben den Manganpromotoren und gegebenenfalls Zink- und/oder, Zinnpromotoren können auch noch weitere Promotoren eingesetzt werden, die vorzugsweise ausgewählt werden aus den Elementen Phosphor, Cäsium, Barium, Eisen und Antimon und deren Verbindungen.

Der P-Promotor wird vorzugsweise aus CuP-Legierungen ausgewählt.

Die Umsetzung findet vorzugsweise bei mindestens 200 °C, besonders bevorzugt mindestens 250 °C, insbesondere mindestens 300 °C und vorzugsweise höchstens 450 °C, besonders bevorzugt höchstens 400 °C statt.

Der Druck beträgt bei der Umsetzung vorzugsweise mindestens 1 bar, insbesondere mindestens 1,5 bar und vorzugsweise höchstens 5 bar, insbesondere höchstens 3 bar, jeweils als absoluter Druck angegeben.

Die hergestellten Methylchlorsilane sind insbesondere Dimethyldichlorsilan, Methyltrichlorsilan und Trimethylchlorsilan und H-Silane.

Das Verfahren kann diskontinuierlich oder bevorzugt kontinuierlich durchgeführt werden. Kontinuierlich bedeutet, dass abreagiertes Silicium und gegebenenfalls mit dem Reaktionsstaub ausgetragene Katalysatoren und Promotoren laufend nachdosiert werden, vorzugsweise als vorgemischte Kontaktmasse. Die kontinuierliche Direktsynthese wird bevorzugt im Wirbelschichtreaktor durchgeführt, wobei vorzugsweise Chlormethan gleichzeitig als Reaktand und Fluidisierungsmedium eingesetzt wird.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

**Beispiel 1**

Es wurden 10 Proben mit unterschiedlichen Mn-Konzentrationen im Laborreaktor untersucht. Das Mn wurde während des Herstellungsprozesses in Silizium eindotiert. Es wurden Kontaktmassen aus diesen 10 Proben mit ansonsten identischer Katalysatorzugabe bestehend aus den Elementen Cu, Zn, Sn, P im Laborreaktor mit Chlormethan untersucht (Volumenstrom = 100 mL/ min).

Dabei wurden jeweils 15 g der Kontaktmasse bei 310 °C mit Methylchlorid behandelt. Die Analytik erfolgte mittels Online-GC. Die Selektivität zum Hauptprodukt Dimethyldichlorsilan wurde folgendermaßen berechnet:

$$S_{M2} = \frac{2 \times (n_{M2} - n_{M2}^0)}{n_{MeCl}^0 - n_{MeCl}}$$

Die Probe mit dem niedrigsten Mn-Gehalt (96 ppm, nicht erfindungsgemäss) zeigte eine deutlich schlechtere Dimethydichlorsilan-Selektivität (88,4%) als die übrigen Proben mit höherem Mn-Gehalt, welche alle über 91% Dimethydichlorsilan-Selektivität zeigten. Die Ergebnisse sind in Tabelle 1 aufgeführt:

Tabelle 1

| Mn-Gehalt | Dimethyldichlorsilan-Selektivität |
| --- | --- |
| 96 Gew.-ppm * | 88,4% |
| 269 Gew.-ppm | 92,5% |
| 582 Gew.-ppm | 92,5% |
| 750 Gew.-ppm | 92,0% |
| 1193 Gew.-ppm | 94,0% |

(fortgesetzt)

| Mn-Gehalt | Dimethyldichlorsilan-Selektivität |
|---|---|
| 1443 Gew.-ppm | 92,8% |
| 2060 Gew.-ppm | 93,0% |
| 3011 Gew.-ppm | 91,2% |
| 3955 Gew.-ppm | 92,8% |
| 4962 Gew.-ppm | 94,5% |
| *nicht erfindungsgemäß | |

**Beispiel 2:**

Es wurden Versuchsreihen mit 3 Proben mit Mn-Gehalten von 96, 269 und 582 ppm Mangan im Laborreaktor untersucht. Die Durchführung der Einzelexperimente war analog zu der in Beispiel 1. Die Kontaktmassen wurden zuvor einer thermischen Vorbehandlung unterzogen um die Katalysatorverteilung zu homogenisieren und die Induktionsphase zu verkürzen. Die Probe mit 96 ppm Mn zeigte eine im Mittel um 2% schlechtere Dimethydichlorsilan-Selektivität als die beiden anderen Proben. Die Ergebnisse sind in Tabelle 2 aufgeführt:

Tabelle 2

| Mn-Gehalt | Dimethydichlorsilan-Selektivität |
|---|---|
| 96 Gew.-ppm * | 89,7% |
| 269 Gew.-ppm | 91,6% |
| 582 Gew.-ppm | 91,8% |
| *nicht erfindungsgemäß | |

**Beispiel 3:**

Im Laborwirbelschichtreaktor wurden Kontaktmassen-Proben mit erhöhten Mn-Konzentrationen bis ca. 400 ppm untersucht. Bei diesen Proben kam der erhöhte Mn-Gehalt aus dem Rohstoff Quarz. Alle Proben zeigten eine sehr gute Aktivität und Dimethydichlorsilan-Selektivität. Die Ergebnisse sind in Tabelle 3 aufgeführt:

Tabelle 3

| Mn-Gehalt | Dimethydichlorsilan-Selektivität |
|---|---|
| 135 Gew.-ppm | 93 % |
| 270 Gew.-ppm | 93 % |
| 396 Gew.-ppm | 93 % |
| 427 Gew.-ppm | 92,6 % |

**Patentansprüche**

1. Verfahren zur Direktsynthese von Methylchlorsilanen durch Umsetzung von Chlormethan mit einer Kontaktmasse, die Silicium, Kupferkatalysator und mindestens 120 Gew.-ppm Mangan enthält.

2. Verfahren nach Anspruch 1, bei dem die Kontaktmasse einen Zinkpromotor enthält.

3. Verfahren nach Anspruch 1 oder 2, bei dem die Kontaktmasse einen Zinnpromotor enthält.

4. Verfahren nach Anspruch 1 bis 3, bei dem noch weitere Promotoren eingesetzt werden, die ausgewählt werden aus elementaren Elementen und deren Verbindungen von Phosphor, Cäsium, Barium, Eisen und Antimon.

5. Verfahren nach Anspruch 1 bis 4, bei dem auf 100 Gewichtsteile Silicium 0,1 bis 10 Gewichtsteile Kupferkatalysator, bezogen auf metallisches Kupfer eingesetzt werden.

**Europäisches Patentamt**
**European Patent Office**
**Office européen des brevets**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 500 724 A (WARD III WILLIAM J [US] ET AL) 19. Februar 1985 (1985-02-19)<br>* Beispiel 1 *<br>* Tabellen I, II, IIa, III, IV *<br>----- | 1-5 | INV.<br>C07F7/16 |
| X | EP 0 191 502 A2 (UNION CARBIDE CORP [US]) 20. August 1986 (1986-08-20)<br>* Seite 20, Zeile 14 - Zeile 32 *<br>* Ansprüche 1-9 *<br>----- | 1-5 | |

**RECHERCHIERTE SACHGEBIETE (IPC)**

C07F

Der vorliegende Recherchenbericht wurde für alle Patentansprüche erstellt

| Recherchenort | Abschlußdatum der Recherche | Prüfer |
|---|---|---|
| Den Haag | 24. Juni 2014 | Eberhard, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**     EP 14 16 7910

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-06-2014

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| US 4500724 | | A | 19-02-1985 | AU | 3083784 | A | 31-01-1985 |
| | | | | BR | 8403806 | A | 09-07-1985 |
| | | | | CA | 1229842 | A1 | 01-12-1987 |
| | | | | DD | 232278 | A5 | 22-01-1986 |
| | | | | FR | 2549838 | A1 | 01-02-1985 |
| | | | | GB | 2144137 | A | 27-02-1985 |
| | | | | JP | H0140035 | B2 | 24-08-1989 |
| | | | | JP | H0529400 | B2 | 30-04-1993 |
| | | | | JP | S6078992 | A | 04-05-1985 |
| | | | | JP | H01164439 | A | 28-06-1989 |
| | | | | US | 4500724 | A | 19-02-1985 |
| EP 0191502 | | A2 | 20-08-1986 | CA | 1230588 | A1 | 22-12-1987 |
| | | | | DE | 3678008 | D1 | 18-04-1991 |
| | | | | EP | 0191502 | A2 | 20-08-1986 |
| | | | | JP | S61187933 | A | 21-08-1986 |
| | | | | US | 4864044 | A | 05-09-1989 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004046181 A1
- US 6407276 A
- US 6339167 A
- DE 4412837 A
- EP 671402 A
- WO 2006031120 A1